Europäisches Patentamt

European Patent Office

Office européen des brevets

(11) Veröffentlichungsnummer: **0 352 442 B1**

(19)

(12) # EUROPÄISCHE PATENTSCHRIFT

(45) Veröffentlichungstag der Patentschrift: **19.11.92**

(21) Anmeldenummer: **89109989.7**

(22) Anmeldetag: **01.06.89**

(51) Int. Cl.5: **C09J 133/14**

(54) **Wasserlöslicher Haftkleber auf Polyvinylcarbonsäurebasis seine Herstellung und seine Verwendung.**

(30) Priorität: **27.07.88 DE 3825527**

(43) Veröffentlichungstag der Anmeldung:
**31.01.90 Patentblatt 90/05**

(45) Bekanntmachung des Hinweises auf die
Patenterteilung:
**19.11.92 Patentblatt 92/47**

(84) Benannte Vertragsstaaten:
**AT BE CH DE ES FR GB GR IT LI LU NL SE**

(56) Entgegenhaltungen:
**US-A- 2 838 421**
**US-H- 509**

(73) Patentinhaber: **Lohmann GmbH & Co. KG**
**Irlicher Strasse 55**
**W-5450 Neuwied 12(DE)**

(72) Erfinder: **Zbigniew, Czech, Dr. Dipl.-Chemiker**
**Rostocker Strasse 10**
**W-5400 Koblenz 1(DE)**

(74) Vertreter: **Neidl-Stippler, Cornelia, Dr.**
**Neidl-Stippler & Partner Rauchstrasse 2**
**W-8000 München 80(DE)**

EP 0 352 442 B1

## Beschreibung

Die Erfindung betrifft einen wasserlöslichen Haftkleber auf Polyvinylcarbonsäurebasis mit mindestens einem hydroxylgruppenhaltigen Weichmacher mit einem Molekulargewicht unter 1000 sowie Vernetzer.

Wasserlösliche Haftkleber werden zur Herstellung von Klebefolien, Klebeetiketten, besonders aber von ein- und doppelseitigen Klebebändern für die Papierindustrie, bspw. beim Endlosmachen von Papierbahnen oder bei fliegendem Rollenwechsel, verwendet.

Bisher wurden zahlreiche unterschiedliche wasserlösliche Haftklebern emtwickelt und für oben erwähnte Zwecke vorgeschlagen. In der US-PS 2 838 421 wurde ein Gemisch von 100 Gew.-Teilen Polyacrylsäure oder eines Polyvinylmethylether-Maleinsäure-Copolymerisats mit 160 Gew.-Teilen eines Hydroxy-Polyalkylen-Weichmachers mit einem Molekulargewicht zwischen 400 und 1000 sowie ggf. einem Vernetzer zur Erhöhung der Temperatur-Stabilität beschrieben. Bei diesem Kleber werden Tack und Freigabe durch eine hohe Umgebungsfeuchtigkeit negativ beeinflußt.

In der US-PS 3 321 451 ist ein in organischen Lösemitteln und Wasser löslicher Hautkleber bekannt geworden, der ein Copolymer aus Acrylsäureester und Comonomeren mit ethylenisch ungesättigter Doppelbindung unter Einbau von NHX Gruppen im Copolymeren zu mindestens 1 Gew.% ist. Dieser Kleber ist nicht ausreichend wasserlöslich.

In der DE-PS 21 42 770 ist eine Mischung aus Acrylsäureestercopolymerisat als Klebrigmacher, Polyvinylmethylether als Weichmacher, einem ethoxylierten Polyvinylalkohol mit einem Molekulargewicht zwischen 15 000 und 180 000, ggf. 5-10 Gew.-Teilen Polyvinylpyrrolidon und bis zu 10 Gew.-Teilen Polyethylenglykol beschrieben. Die Herstellung ist aufwendig.

In der US-PS 3865 770 ist ein Copolymerisat aus Alkylacrylat mit einem nicht tertiären Alkohol mit 1 bis 14 C-Atomen und einem oder mehreren Vinylcarboxylsäuremonomer/en mit sekundärem oder tertiären Alkanolamin mit 4 bis 18 C-Atomen partiell neutralisiert und einem wasserdispergierbaren tackfördernden Material, wie nicht substituierten Polyoxyalkylenen, angegeben. In der DE-PS 23 11 746 ist ferner ein Copolymerisat aus Methylvinylether und Maleinsäure mit Alkylphenolpolyglykolether als Weichmacher veröffentlicht.

In der US-PS 4 413 080 ist ein zu neutralisierender wasserdispergierbarer Haftkleber angegeben, bei dem Acrylat/Acrylsäure Copolymere mit einem sauren Harz oder Harzderivat vermischt werden, das teilweise mit KOH oder NaOH und/oder LiOH neutralisiert ist und mit einer ölartigen, wasserlöslichen Polyoxyethylenverbindung weichgemacht wurde. Dieser Kleber ist kompliziert herzustellen und teuer.

In der EP 0147067 ist ein nur in warmem Wasser lösliches Klebeband beschrieben, das auf Basis von Copolymeren auf Acrylat/Acrylsäurebasis und bestimmten ethoxylierten Weichmachern, die mit einer Base zumindest partiell neutralisiert werden, herstellbar ist, beschrieben.

Obwohl diese bekannten wasserlöslichen Haftkleber in der Papierindustrie eingesetzt werden, weisen sie verschiedene Mängel auf, die ihre praktische Verwendung einschränken. Untersuchungen haben ergeben, daß derartige Kleber zwar zu verschiedenen Papiertypen eine gute Haftung besitzen, jedoch ihre thermische Scherfestigkeit oberhalb von 200 Grad Celsius unzureichend ist und eine vollständige Löslichkeit in allen pH-Bereichen nicht gegeben ist. Die Kleber neigen auch stark zum Durchschlagen.

Es war daher Aufgabe der Erfindung, wasserlösliche Haftkleber, insbesondere zum Einsatz in der Papierindustrie, herzustellen, die die oben aufgeführten Nachteile der Materialien nach dem Stand der Technik nicht mehr aufweisen.

Die Aufgabe wird erfindungsgemäß durch einen wasserlöslichen Haftkleber auf Polyvinylcarbonsäurebasis mit mindestens einem hydroxylgruppenhaltigen Weichmacher mit einem Molekulargewicht unter 1000, der ggf. mit einem Vernetzer vernetzt ist, gelöst, der
40-95 Gew.-Teile Poly-$\beta$-acryloyloxypropionsäure oder eines Copolymerisats von $\beta$-Acryloyloxypropionsäure mit mindestens einer ungesättigten copolymerisierbaren Verbindung und
5 bis 58 Gew.-Teile, eines Polyoxyalkylens mit einem Molekulargewicht zwischen etwa 80 und 1000 und/oder Glycerin oder wasserlösliche Glycerinderivate,
sowie ggf. weitere Komponenten, Vernetzer, Lösemittel, Färbemittel, Füllstoffe, Alterungsinhibitoren aufweist.

Es kann bevorzugt sein, 45 bis 85 Gew.-Teile und ganz besonders bevorzugt, 50 bis 80 Gew.-Teile Poly-$\beta$-acryloyloxypropionsäure oder eines Copolymerisates derselben eingesetzt werden.

Ferner kann es auch bevorzugt sein, 10 bis 52 Gew.-Teile und ganz besonders bevorzugt 15 bis 45 Gew.-Teile eines Polyoxyalkylens einzusetzen.

Vorteilhafte Weiterbildungen der Erfindung ergeben sich aus den Unteransprüchen.

Bei einer besonders bevorzugten Ausführungsform ist die ungesättigte mit $\beta$-Acryloyloxypropionsäure copolymerisierbare Verbindung ausgewählt aus der Gruppe bestehend aus Vinylessigsäure, Acrylsäure, Itaconsure, Methacrylsäure, Aconitsäure, Fumarsäure, Acrylamid, Methacrylamid, N-Vinylpyrrolidon, Vinylcaprolactam, hydroxylgruppenhaltigen (Meth-)Acrylaten und kurzkettigen Acrylsäurealkylestern mit 1 bis 4 C-Atomen im Alkylrest.

Dabei ist es besonders bevorzugt, daß das wasserlösliche Polyoxyalkylen Polyoxyethylen,Polyoxypropylen oder ein Copolymerisat aus Ethylenoxid und Propylenoxid ist und die wasserlöslichen Glycerinderivate aus der Gruppe bestehend aus Glycerinaldehyd, Glycerinsäure und deren Ester, Glyerinester, Diacetin und Monoacetin ausgewählt sind.

Es kann günstig sein, wenn die Haftkleber zur Vereinfachung ihrer Verarbeitung Lösemittel aufweisen und diese Lösemittel wasserlöslich ist. Bevorzugte Lösemittel sind solche, die Propylalkaohol, Isopropylalkohol, Wasser, Butylalkohol, Isobutylalkohol und Mischungen aufweisen.

Die Erfindung betrifft auch ein Verfahren zur Herstellung eines Haftklebers durch Mischen von nach an sich bekannten Verfahren hergestellten Homo-oder Copolymerisaten der $\beta$-Acryloyloxypropionsäure und deren Abkömmlinge mit dem hydroxylgruppenhaltigen Weichmacher in einem wasserlöslichen Lösemittel unter Durchführung einer Vernetzung mittels Vernetzern in an sich bekannter Weise.

Ein besonders bevorzugtes Anwendungsgebiet der erfindungsgemäßen Haftkleber ist die Papierindustrie, die Haftkleber bzw. haftklebende Bänder u.a. zum Aneinanderfügen von Papierbahnen benötigt. Der nach der Verarbeitung der Papierbahnen entstehende Abfall, der diese Haftkleber aufweisenden Materialien beinhaltet, wird normalerweise einem in wäßrigem Medium stattfindenden Pülpeverfahren zugeführt, sodaß es wünschenswert ist, daß der Haftkleber vollständig in Wasser löslich ist, damit diese Abfälle wieder zur Papierherstellung verwendet werden können.

Die erfindungsgemäßen Haftklebemassen zeichnen sich durch eine exzellente Hitzebeständigkeit und Unempfindlichkeit gegen Durchschlagen aus, während sie gleichzeitig eine gute Wasserlöslichkeit bei verschiedenen pH-Werten besitzen und außerdem auch bei höheren Temperaturen eine gute Scherfestigkeit zeigen.

Nachfolgend wird die Erfindung anhand von Beispielen näher erläutert.

Beispiel 1

In einem 1 Liter Dreihalskolben, der mit Rührer, Rückflußkühler, Thermometer und Tropftrichter ausgerüstet war, wurden 150 g Wasser und 50 g Propanol-1 vorgelegt und mittels eines elektrisch beheizten Ölbades auf eine Temperatur von 100 Grad Celsius erhitzt. Aus dem Tropftrichter wird innerhalb von 2 Std. unter Rühren in das vorgelegte Lösemittel ein Gemisch aus 180 g $\beta$-Acryloyloxypropionsäure, 10 g Acrylsäure und 1 g Azoisobutyronitril gegeben. Nach 3-stündiger Reaktion wird das erhaltene Polymerisat (n = 10 Pa s) mit Isopropylalkohol auf einen Feststoffgehalt von 40% verdünnt, mit 80 Gew.% Polypropylenglykol 400 und 1,0 Gew. Aluminiumacetylacetonat (bezogen auf den Festestoffgehalt) abgemischt. Der so erhaltene Haftkleber wird mit einem Kleberantrag von 35 g/gm auf ein siliconisiertes Papier aufgetragen, im Trockenkanal bei 100 Grad Celsius getrocknet und anschließend durch Kaschieren auf Teefilterpapier aufgebracht. Das als Endprodukt erhaltene wasserdispergierbare Haftklebeband wird in Papierbeschichtungsanlagen eingesetzt, wo eine dauernde oder kurzzeitige sehr hohe thermische Belastbarkeit gefordert ist und wo das Durchschlagen des Klebers ein Hauptproblem ist.

Das derart hergestellte wasserdispergierbare Spleißband weist folgende Eigenschaften auf:

<u>Klebkraft (STAHL) (nach AFERA 4015)</u>

Grad Celsius     Belastung
20               10   N / 12 N
70               10   N  (Trägerriß)
120               7,5 N  (Trägerriß)
150               6   N  (Trägerriß)
200               4   N  (Trägerriß)


<u>Klebkraft  (Papier) (nach AFERA 4015)</u>
20 Grad Celsius     14 N / 13 N

<u>Tack (STAHL) (nach AFERA 4001)</u>
2N   / 2N


Statische Scherfestigkeit

Gemessen auf Siliconrohpapier bei 20 Grad Celsius nach Anwalzen mit 5 kg (Verklebungsfläche 625 qmm, Belastung 300 g)
20 Grad Celsius < 1 mm

Wasserlöslichkeit

1250 qmm Klebeband werden 15 Minuten in 150 ml Wasser gerührt und die Auflösung des Bandes beurteilt:

| pH = 3 | löslich |
| pH = 7 | schnell löslich |
| pH = 12 | schnell löslich |

Vergleichsbeispiel (gemäß US-PS 2 838 421)

Ein in der gleichen Weise, wie in Beispiel 1 beschrieben, hergestellter Haftkleber aus 100 Gewichtsteilen Polyacryksäure, 160 Gewichtsteilen Polypropylenglykol (Molekulargewicht 425), 320 Gewichtsteilen Methylalkohol und 0,6 Gewichtsteile Aluminiumacetylacetonat (Vernetzer) wurde auf ein Siliconpapier aufgetragen, im Trockenkanal getrocknet und durch Kaschieren auf ein Teefilterpapier aufgebracht.
Es wurden folgende Prüfwerte ermittelt:

## Klebkraft (STAHL) (nach AFERA 4015)

| Grad Celsius | Belastung | | |
|---|---|---|---|
| 20 | 6,0 | N | Kohäsionsbruch |
| 70 | 4,0 | N | Kohäsionsbruch |
| 120 | 1,5 | N | Kohäsionsbruch |
| 150 | 0,5 | N | Kohäsionsbruch |
| 200 | 0,5 | N | Kohäsionsbruch |

.

## Klebkraft (Papier) (nach AFERA 4015)

20 Grad Celsius        6 N Kohäsionsbruch

## Tack (STAHL) (nach AFERA 4001)

1 N Kohäsionsbruch

Statische Scherfestigkeit

Gemessen auf Siliconrohpapier bei 20 Grad Celsius nach Anwalzen mit 5 kg (Verklebungsfläche 625 qmm, Belastung 300 g)

20 Grad Celsius < 1 mm

Wasserlöslichkeit

1250 qmm Klebeband werden 15 Minuten in 150 ml Wasser gerührt und beurteilt, wie sich das Band auflöste.

| pH = 3 | löslich |
|---|---|
| pH = 7 | schnell löslich |
| pH = 12 | schnell löslich |

**Patentansprüche**

1. Wasserlöslicher Haftkleber auf Polyvinylcarbonsäurebasis mit mindestens einem hydroxylgruppenhaltigen Weichmacher mit einem Molekulargewicht unter 1000 sowie Vernetzer, gekennzeichnet durch
40-95 Gew.-Teile Poly-$\beta$-acryloyloxypropionsäure oder eines Copolymerisats von $\beta$-Acryloyloxypropionsäure mit mindestens einer ungesättigten copolymerisierbaren Verbindung und
5 bis 58 Gew.-Teile, eines Polyoxyalkylens mit einem Molekulargewicht zwischen etwa 80 und 1000 und/oder Glycerin oder wasserlösliche Glycerinderivate,
sowie ggf. weitere Komponenten, Vernetzer, Lösemittel, Färbemittel, Füllstoffe, Alterungsinhibitoren.

2. Wasserlöslicher Haftkleber nach Anspruch 1, dadurch gekennzeichnet, daß die ungesättigte copolymerisierbare Verbindung augewählt ist aus der Gruppe bestehend aus Vinylessigsäure, Acrylsäure, Itaconsäure, Methacrylsäure, Aconitsäure, Fumarsäure, Acrylamid, Methacrylamid, N-Vinylpyrrolidon, Vinylcaprolactam, hydroxylgruppenhaltigen (Meth-)Acrylaten und kurzkettigen Acrylsäurealkylestern mit 1 bis 4 C-Atomen im Alkylrest.

3. Wasserlöslicher Haftkleber nach Anspruch 1 oder 2, dadurch gekennzeichnet, daß das wasserlösliche Polyoxyalkylen Polyoxyethylen, Polyoxypopylen oder ein Copolymerisat aus Ethylenoxid und Propylenoxid ist und die wasserlöslichen Glycerinderivate aus der Gruppe bestehend aus Glycerinaldehyd, Glycerinsäure und deren Ester, Glyerinester , Diacetin und Monoacetin ausgewählt sind.

5

EP 0 352 442 B1

4. Wasserlöslicher Haftkleber nach Anspruch 1, dadurch gekennzeichnet, daß das Lösemittel ein wasserlösliches Lösemittel ist.

5. Verfahren zur Herstellung eines Haftklebers nach einem der vorangehenden Ansprüche, gekennzeichnet durch Mischen von nach an sich bekannten Verfahren hergestellten Homo-oder Copolymerisaten der $\beta$-Acryloyloxypropionsäure und deren Abkömmlinge mit einem hydroxylgruppenhaltigen Weichmacher in einem wasserlöslichen Lösemittel, ggf. unter Zugabe eines Vernetzers.

6. Verwendung eines Haftklebers nach einem der vorangehenden Ansprüche in der Papierverarbeitung.

## Claims

1. Water-soluble, pressure sensitive adhesive on basis of polyvinylcarbonic acid comprising at least one plasticizer having hydroxyl-groups with a molecular weight below 1000 as well as a cross-linking agent, characterised by 40 to 95 parts by weight poly-$\beta$-acryloyloxypropionic acid or a copolymerisate of $\beta$-acryloyloxypropionic acid with at least one unsaturated copolymerizable compound and 5 to 58 parts by weight of a polyoxyalkylene with a molecular weight between approximately 80 and 1000 and/or glycerol or water-soluble glycerol derivatives, as well as optionally further constituents, cross-linking agents, solvents, dyes, fillers, anti-agers.

2. Water-soluble pressure sensitive adhesive according to claim 1 characterised in that an unsaturated copolymerizable compound is selected from a group comprising vinylacetic acid, acrylic acid, itaconic acid, methacrylic acid, aconitic acid, fumaric acid, acrylamide, methacrylamide, N-vinylpyrrolidone, vinylcaprolactame, hydroxyl group containing (meth-)acrylates and short-chain esters of acrylic acid with between 1 and 4 C-atoms in the alkyl residue.

3. Water-soluble pressure sensitive adhesive according to claim 1 or 2, characterised in that the water-soluble polyoxyalkylene is polyoxyethylene, polyoxypropylene or a copolymerisate of ethyleneoxide and propyleneoxide, and the water-soluble glycerol derivates are selected from a group comprising glycerealdehyde, glyceric acid and its ester, glycerol ester, diacetine and monoacetine.

4. Water-soluble pressure sensitive adhesive according to claim 1, characterised in that the solvent is a water-soluble solvent.

5. Process for the production of an pressure sensitive adhesive according to one of the above claims, characterised by mixing of conventionally produced homoor copolymerisates of the $\beta$-acryloyloxypropionic acid and its derivatives with a plasticizer having hydroxyl groups in a water-soluble solvent, optionally with the addition of a cross-linking agent.

6. Use of a pressure sensitive adhesive according to one of the above claims in paper processing.

## Revendications

1. Colle adhésive soluble dans l'eau à base d'acide polyvinylcarboxylique comportant au moins un plastifiant à groupes hydroxyle avec un poids moléculaire inférieur à 1000 ainsi que des agents de réticulation, caractérisé par
40 - 95 parties en poids d'acide poly-bêta-acryloyloxy propionique ou d'un copolymère d'acide bêta-acryloyloxy propionique avec au moins une liaison copolymérisable insaturée et
5 à 58 parties en poids d'un polyoxyalkylène avec un poids moléculaire d'environ 80 à 1000 et/ou de glycérine ou de dérivés de glycérine solubles dans l'eau,
ainsi qu'éventuellement d'autres composants, agents de réticulation, solvants, colorants, charges et inhibiteurs de vieillissement.

2. Colle adhésive soluble dans l'eau selon la revendication 1, caractérisée en ce que la liaison copolymérisable insaturée est choisie parmi le groupe constitué de l'acide vinylacétique, de l'acide acrylique, de l'acide itaconique, de l'acide méthacrylique, de l'acine aconitique, de l'acide fumarique, de l'acrylamide, du méthacrylamide, de la N-vinylpyrrolidone, du vinylcaprolactame, des (méth)acrylates contenant des groupes hydroxyle et des alkyl esters d'acide acrylique à chaîne courte contenant 1 à 4 atomes de carbone dans le radical alkyle.

3. Colle adhésive soluble dans l'eau selon la revendication 1 ou 2, caractérisée en ce que le polyoxyalkylène soluble dans l'eau est le polyoxyéthylène, le polyoxypropylène ou un copolymère d'oxyde d'éthylène et d'oxyde de propylène et les dérivés de glycérine solubles dans l'eau sont choisis dans le groupe constitué de l'aldéhyde glycérique, de l'acide glycérique et de leurs esters, de l'ester glycérique, de la diacétine et de la monoacétine.

4. Colle adhésive soluble dans l'eau selon la revendication 1, caractérisée en ce que le solvant est un solvant soluble dans l'eau.

5. Procédé de fabrication d'une colle adhésive selon l'une quelconque des revendications précédentes, caractérisée par un mélange d'homo ou copolymères fabriqués selon des procédés connus en soi de l'acide bêta-acryloyloxypropionique et de leurs dérivés avec un plastifiant contenant des groupes hydroxyle dans un solvant soluble dans l'eau, éventuellement avec addition d'un agent de réticulation.

6. Emploi d'une colle adhésive selon l'une quelconque des revendications précédentes dans la transformation du papier.